# EUROPÄISCHE PATENTANMELDUNG

(11) **EP 1 681 202 A2**
(43) Veröffentlichungstag der Anmeldung: **19.07.2006**
(21) Anmeldenummer: 06000252.4
(22) Anmeldetag: 07.01.2006
(51) Int. Cl.: B60Q 1/26, F21V 31/00, F21V 31/04, F21Y 101/02

(54) **Fahrzeugleuchte**

(30) Priorität: 15.01.2005 DE 102005001998
(71) Anmelder: Schmitz Gotha Fahrzeugwerke GmbH, 99867 Gotha (DE)
(72) Erfinder: Koch, Josef, 89081 Ulm (DE)
(74) Vertreter: Weber, Gerhard

(57) **Zusammenfassung**

Für eine Fahrzeugleuchte mit gegen Witterungseinflüsse abgedichtetem Leuchtengehäuse wird vorgeschlagen, das Leuchtengehäuse durch eine gewölbte Lichtscheibe und einen ebenen Gehäuseboden zu bilden, wobei der Gehäuseboden direkt durch den Schaltungsträger für eine elektronische Lichtquelle, beispielsweise Leuchtdioden mit Beschaltung, gebildet ist. Die Lichtscheibe kann topfförmig ausgebildet oder durch ein Profil gebildet sein. Der Schaltungsträger kann vorteilhafterweise mehrschichtig aufgebaut sein und dabei neben einer ersten Schicht als Platine mit Leiterbahnen, Leuchtdioden und weiteren Bauelementen eine weitere Schicht aus gut wärmeleitendem Material zur Abführung von Verlustwärme der elektronischen Bauelemente aufweisen.

## Beschreibung

Die Erfindung betrifft eine Fahrzeugleuchte mit einem hohlen geschlossenen Leuchtengehäuse.

Fahrzeugleuchten mit einem hohlen geschlossenen Leuchtengehäuse sind häufig aus zwei Gehäuseteilen, nämlich einer transparenten Lichtscheibe und einem Gehäuseboden gebildet. Die Lichtquelle oder eine Halterung dafür ist typischerweise an dem Gehäuseboden befestigt. Lichtscheibe und Gehäuseboden sind entlang einer Gehäusefuge zusammengefügt und der von Lichtscheibe und Gehäuseboden umschlossene Hohlraum ist entlang der Gehäusefuge abgedichtet. Bei einer aus der DE 203 04 930 U1 bekannten Fahrzeugleuchte sind Lichtscheibe und Gehäuseboden als separat hergestellte Spritzgussteile ausgeführt, wobei die Lichtscheibe topfförmig ausgebildet ist. Eine LED als Lichtquelle ist mit PUR-Material in eine Wanne des Gehäusebodens eingegossen, so dass nur noch die Abstrahlfläche der Diode über das Vergussmaterial in den Hohlraum des Leuchtengehäuses ragt.

Der Erfindung liegt die Aufgabe zugrunde, eine vorteilhafte Fahrzeugleuchte mit einem Leuchtengehäuse mit einer Leuchtscheibe und einem Gehäuseboden anzugeben.

Die Erfindung ist im Patentanspruch 1 beschrieben. Die abhängigen Ansprüche enthalten vorteilhafte Ausgestaltungen und Weiterbildungen der Erfindung.

Die Verwendung eines Schaltungsträgers mit der elektronischen Lichtquelle und Leiterbahnen zugleich als Gehäuseboden ist besonders vorteilhaft durch den damit verbundenen Wegfall eines separaten Formteils für den Gehäuseboden. Dies ist insbesondere von Vorteil, wenn die elektronische Lichtquelle zusätzlich zu wenigstens einem lichtemittierenden Element noch weitere elektronische Bauelemente, insbesondere als funktional mit dem lichtemittierenden Element zusammenhängende Beschaltung umfasst.

Das wenigstens eine lichtemittierende Element ist vorzugsweise eine Leuchtdiode. Als Beschaltung sind insbesondere Vorwiderstände, Regler oder Begrenzer für Strom, Spannung oder Leistung von Bedeutung. Die elektronische Lichtquelle ist vorteilhafterweise auf einer Schaltungsplatine aufgebaut, welche vorzugsweise einseitig auf der dem Hohlraum des Leuchtengehäuses zugewandten Seite mit Bauelementen bestückt ist. Die Schaltungsplatine kann als in sich formstabile starre ebene Platte aufgebaut sein und allein den Schaltungsträger bilden.

In anderer Ausführung kann der Schaltungsträger aus wenigstens zwei Schichten aufgebaut sein, wobei vorteilhafterweise eine dem Hohlraum des Leuchtengehäuses zugewandte erste Schicht als Platine mit Leiterbahnen und Bauelementen aufgebaut ist. Diese erste Schicht kann dabei auch sehr dünn und/oder flexibel nach Art einer Folienplatine ausgeführt sein, sofern eine dem Hohlraum abgewandte zweite Schicht eine ausreichende Eigensteifigkeit und Formstabilität besitzt. Eine solche zweite Schicht kann vorteilhafterweise aus gut wärmeleitendem Material bestehen und insbesondere eine metallische Platte, vorzugsweise aus Aluminium sein. Eine solche gut wärmeleitende Schicht steht vorteilhafterweise in gutem Wärmekontakt mit Bauelementen auf der ersten Schicht, für welche die Abführung von Verlustwärme im Bereich von Bedeutung ist. Vorteilhafterweise erstreckt sich wenigstens eine der beiden Schichten, vorzugsweise die zweite Schicht im wesentlichen über die gesamte Fläche des Schaltungsträgers, wogegen in einem solchen Verbund die andere Schicht auch auf einen Teil der Fläche des Schaltungsträgers beschränkt sein kann.

Dem Hohlraum zugewandte, nicht von Bauelementen der elektronischen Lichtquelle beanspruchte Flächenbereiche können in besonderer Ausführung mit Reflektoreinrichtungen versehen sein.

Die Lichtscheibe ist vorteilhafterweise von dem Schaltungsträger weg gewölbt ausgeführt und kann vorteilhafterweise Anschlagelemente oder Halteelemente zur definierten relativen Positionierung von Lichtscheibe und Schaltungsträger aufweisen. In bevorzugter Ausführung ist die Lichtscheibe topfförmig ausgeführt und bildet mit dem Schaltungsträger als Gehäuseboden eine umlaufende Gehäusefuge, welche vorteilhafterweise mit einem Dichtmaterial abgedichtet wird. In anderer Ausführung kann die Lichtscheibe auch ein zu dem Schaltungsträger hin offenes, im wesentlichen U-förmiges Profil sein, welches mit dem Schaltungsträger einen in Längsrichtung des Profils an beiden Enden offenen Hohlraum bildet, dessen Enden z. B. durch Endverschlusskappen oder durch ein Vergussmaterial verschlossen werden. Die Ausführung der Lichtscheibe als Profil ist insbesondere vorteilhaft bei Leuchtenserien mit gleichbleibendem Querschnitt aber variierender Länge von Leuchtengehäusen. Die Leuchtscheibe kann sowohl bei topfförmiger Ausbildung als auch als Profil Stützelemente in Form von Säulen, Wänden etc. aufweisen, welche vorteilhafterweise bis zu dem Schaltungsträger reichen können.

Auch bei der Profilversion der Leuchtscheibe werden vorteilhafterweise Gehäusefugen zwischen Lichtscheibe und Gehäuseboden durch ein Dichtmaterial verschlossen. Dichtmaterial kann auch an den Fugen zwischen Endkappen und Lichtscheibe und/oder Schaltungsträger vorgesehen sein. Vorteilhafterweise ist die gesamte, dem Hohlraum abgewandte Rückseite des Schaltungsträgers bis zu der bzw. den Gehäusefugen mit Dichtmaterial verkleidet. Dichtmaterial an den Gehäusefugen und an Endbereichen sind vorteilhafterweise gleich und werden bevorzugt gleichzeitig aufgebracht. Sofern elektrische Zuleitungen von der Rückseite des Schaltungsträgers nach außen führen, sind diese vorteilhafterweise in einem Anfangsbereich von dem Schaltungsträgerweg gleichfalls mit Dichtungsmaterial ummantelt. Sofern, insbesondere bei der Ausführung der Lichtscheibe als Profil, elektrische Zuleitungen seitlich herausgeführt sind, können diese z. B. abgedichtet durch eine Endverschlusskappe geführt sein oder durch Vergussmaterial dicht umschlossen sein.

Nach außen führende elektrische Zuleitungen können in einer ersten vorteilhaften Ausführungsform als mehradriges Kabel ausgeführt sein. In anderer vorteilhafter Ausführungsform können Zuleitungen durch eine außenliegende Kontaktvorrichtung zum Anschluss der Leuchte an ein externes Kabel gebildet sein.

Das Dichtmaterial kann ein in einer Spritzgussform aufgebrachtes thermoplastisches Material, insbesondere ein thermoplastisches Elastomer sein. Das Material, welches insbesondere auch eine Materialmischung sein kann, ist vorteilhafterweise auf die mit ihm in flächigen Kontakt tretenden Materialien von Lichtscheibe, Schaltungsträger, Endverschlusskappen und Zuleitungen so abgestimmt, dass jeweils kriechwasserdichte festhaftende Flächenverbindungen beim Aufbringen des Dichtmaterials entstehen. In anderer Ausführung kann das Dichtmaterial auch durch ein anfänglich bei Normaldruck und Umgebungstemperatur giessfähiges, insbesondere dünnflüssiges Material gegeben sein, welches sich nach dem Aufbringen verfestigt.

Die Erfindung ist nachfolgend anhand bevorzugter Ausführungsbeispiele unter Bezugnahme auf die Abbildungen noch eingehend veranschaulicht. Dabei zeigt:
- Fig. 1: eine erste Ausführungsform einer erfindungsgemäßen Fahrzeugleuchte in geschnittener Seitenansicht,
- Fig. 2: eine Ausführungsform mit einem Profil als Leuchtscheibe,
- Fig. 3: eine Ausführung mit vergossenem Profilende zu Fig. 2,
- Fig. 4: eine Profilleuchte mit einer Endverschlusskappe,
- Fig. 5: Details einer formschlüssigen Verankerung von Dichtmaterial.

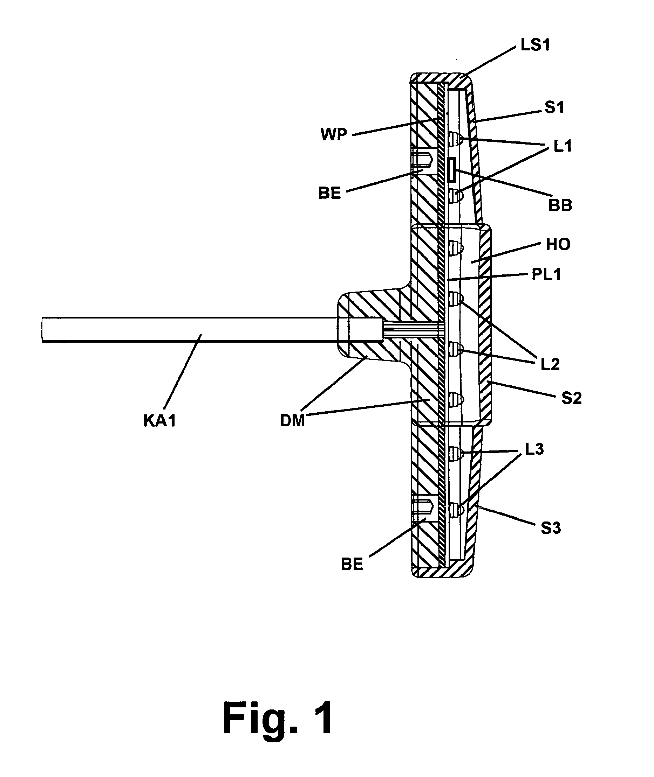

Bei der in Fig. 1 in Seitenansicht skizzierten Fahrzeugleuchte ist eine Lichtscheibe LS1 als ein nach links hin offenes topfförmiges Spritzgussteil aus transparentem Material ausgeführt. Die Lichtscheibe LS1 kann beispielsweise kreisrund, rechteckig, oval etc. ausgeführt sein. Die Lichtscheibe weist in Haupt-Abstrahlrichtung der eingesetzten Lichtquelle drei Durchtrittsbereiche S1, S2, S3 auf, welche aber auch übergangslos eine einzige Lichtdurchtrittsfläche bilden können. Im skizzierten Beispiel sei angenommen, dass die Lichtquelle mehrere voneinander unabhängige Teil-Lichtquellen L1, L2, L3 mit jeweils mehreren Leuchtdioden für unterschiedliche, voneinander unabhängige Beleuchtungsfunktionen, wie beispielsweise Rückleuchte, Bremslicht und Blinker enthalte. Die einzelnen Leuchtdioden sind auf einer gemeinsamen Platine PL1 angeordnet, welche als starre Platine oder auch als flexible Platine ausgeführt sein kann. Auf der Platine können neben den Leuchtdioden noch weitere Bauelemente BB zur Beschaltung der einzelnen Teillichtquellen oder der gesamten Lichtquelle vorgesehen sein. Ein solches Element ist angedeutet. Diese Bauelemente können beispielsweise Vorwiderstände, Regler oder Begrenzer für Strom, Spannung oder Leistung darstellen. Die Platine enthält Leiterbahnen zur Verbindung der einzelnen Leuchtdioden mit den Bauelementen BB und/oder untereinander und/oder mit Anschlüssen einer mehradrigen Zuleitung, welche im gewählten Beispiel als mehradriges Kabel KA1 ausgeführt ist.

Die Leuchtdioden der Lichtquellen und die zusätzlichen Bauelemente BB sind vorteilhafterweise alle auf der dem Hohlraum HO zwischen Platine und Leuchtscheibe zugewandten Seite der Platine PL1 angeordnet und ragen in den Hohlraum HO.

Auf der dem Hohlraum HO abgewandten Seite der Platine PL1 ist in vorteilhafter Ausführung eine Platte WP angeordnet, welche insbesondere aus gut wärmeleitendem Material, wie beispielsweise Aluminium, bestehen kann. Die Platte WP ist vorteilhafterweise fest mit der Platine PL1 verbunden, insbesondere verklebt. Die Platine PL1 kann dabei, wenn die Platte WP eine hinreichende Eigensteifigkeit besitzt, auch als Folienplatine ausgeführt und auf die Platte WP in gut wärmeleitendem Kontakt aufgeklebt sein. Eine auf der dem Hohlraum HO abgewandten Seite der Platine PL1 angeordnete Platte aus gut wärmeleitendem Material ist vorteilhafterweise geeignet, Verlustleistungen in den Leuchtdioden oder den Bauelementen BB, welche dort lokal entstehen, schnell abzuleiten, und flächig zu verteilen.

Die Kombination von Platte WP und Platine PL1 sei als zweischichtiger Schaltungsträger im Sinne der vorliegenden Erfindung angesehen. Der Schaltungsträger kann auch nur einschichtig als in sich formstabile Platine ausgeführt sein oder in wieder anderer Ausführung mehr als zwei Schichten aufweisen. Die einzelnen Schichten sind nicht notwendigerweise jeweils über die ganze Fläche des Schaltungsträgers ausgedehnt.

Der Schaltungsträger ist von der offenen Gehäuseseite der Lichtscheibe LS1 her in diese eingesetzt und vorzugsweise durch eine Anschlagschulter AS der Lichtscheibe LS1 in definierter relativer Position zu der Lichtscheibe positioniert. Der Schaltungsträger kann bis zur endgültigen Fertigstellung der Leuchte in dieser Position in der Lichtscheibe festgeklebt oder klemmend oder auf andere Weise, beispielsweise durch Rastvorsprünge, gehalten sein.

Der Schaltungsträger aus WP und PL1, bildet mit der Lichtscheibe LS1 im Bereich der Anschlagschulter AS eine umlaufende Gehäusefuge. Zur zuverlässigen Abdichtung dieser Gehäusefuge und gegebenenfalls zur gleichzeitigen Fixierung des Schaltungsträgers in der Lichtscheibe LS1 wird von der dem Hohlraum abgewandten Seite des Schaltungsträgers ein Dichtmaterial DM aufgebracht, welches zumindest den Bereich der Gehäusefuge zwischen Schaltungsträger und Lichtscheibe vollständig abdichtet. Vorzugsweise ist auch im Bereich des zur elektrischen Versorgung der Lichtquelle dienenden Zuleitungskabels KA noch Dichtmaterial um die Kabeldurchführung durch die Platte WP zu der Platine PL1 aufgebracht, welches vorteilhafterweise sich von dem Leuchtenkörper weg in Richtung des Kabelverlaufs noch ein Stück weit erstreckt und ähnlich einem an sich bekannten Kabel-Knickschutz den Kabelansatz am Leuchtenkörper stabilisiert und darüber hinaus durch die verlängerte Verbindungsstrecke mit dem Kabel eine zuverlässige Abdichtung der Grenzfläche zwischen Kabel und Dichtmaterial gewährleistet. Vorzugsweise ist die gesamte, dem Hohlraum HO abgewandte Rückseite des Schaltungsträgers flächig durchgehend mit dem Dichtmaterial versehen. Hierbei können Befestigungselemente BE eingebettet sein, welche bis zu der Platte WP reichen und mit dieser verbunden sein können. Solche Befestigungselemente BE können zur Befestigung des fertigen Leuchtenkörpers an einem Fahrzeug dienen. In anderer, nicht skizzierter Ausführungsform können Befestigungsvorrichtungen auch von vorn herein an der Lichtscheibe LS1, vorzugsweise von deren seitlichem Rand nach außen ragend, beispielsweise in Form von Befestigungslaschen, vorgesehen sein.

Zuleitungen können in anderer, nicht skizzierter Ausführung auch durch eine Anschlussvorrichtung mit mehreren Kontakten, insbesondere zum Anschluss an ein externes Kabel, gegeben sein.

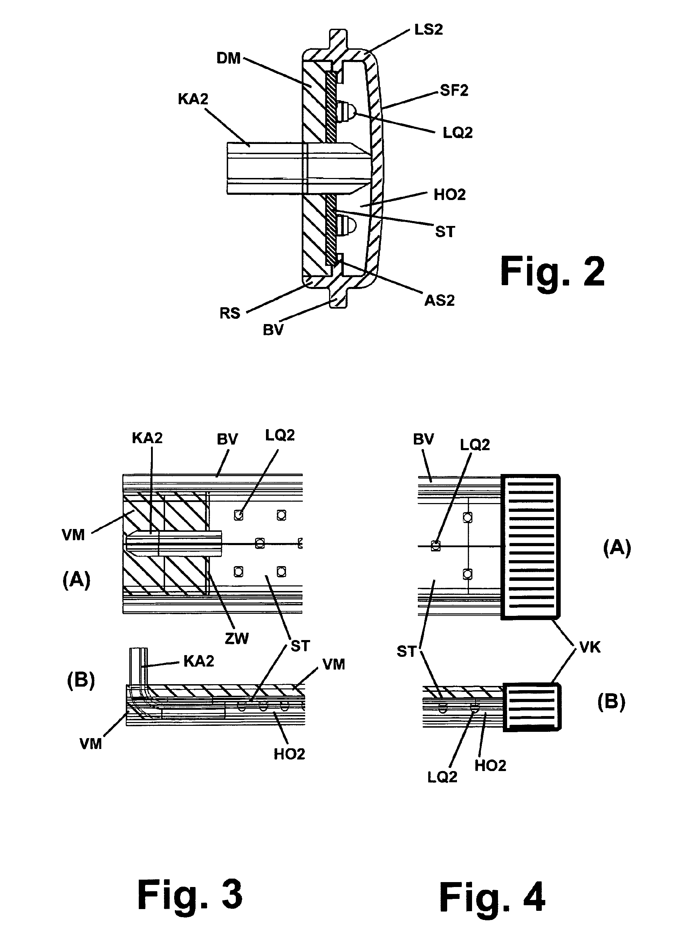

In Fig. 2 ist in geschnittener Seitenansicht eine Ausführungsform einer erfindungsgemäßen Fahrzeugleuchte skizziert, bei welcher eine Lichtscheibe LS2 als senkrecht zur Zeichenebene der Fig. 2 verlaufendes Spritzgussprofil aus transparentem Material ausgeführt ist. Das Profil enthält beispielsweise eine durchstrahlte Fläche SF2, eine Anlageschulter AS2, nach hinten ragende Wandstege RS und seitlich abstehende Befestigungsvorsprünge BV. Ein Schaltungsträger ST, hier als einschichtige Platine angenommen, trage eine Mehrzahl von Leuchtdioden einer Lichtquelle LQ2 sowie gegebenenfalls weitere, nicht mit dargestellte Bauelemente in funktionalem Zusammenhang mit der Lichtquelle. Zur Abdichtung der Gehäusefuge zwischen Schaltungsträger ST und der Anlageschulter AS2 der Lichtscheibe LS2 ist wieder Dichtmaterial DM auf der dem Hohlraum HO2 zwischen Schaltungsträger und Lichtscheibe abgewandten Seite des Schaltungsträgers vorzugsweise ganzflächig zwischen den Wandstegen RS der Lichtscheibe aufgebracht.

Bei einer Ausführung einer Leuchte nach Fig. 2 ist der Hohlraum HO2 senkrecht zur Zeichenebene der Fig. 2 a priori nach beiden Seiten offen. Zur Abdichtung eines solchen offenen Endes kann beispielsweise vorgesehen sein, dass das Ende mit einer Vergussmasse VM vergossen wird, welches dasselbe Material sein kann wie das Dichtmaterial DM und welches auch gemeinsam mit diesem aufgebracht werden kann. Zur Begrenzung des Raumes für das Vergussmaterial kann das Profilende durch eine nur für den Verguss dort verbleibende oder auch dauerhaft mit dem Leuchtenkörper verbundene Endwandplatte abgeschlossen sein. Bei dünnflüssigem Vergussmaterial kann ferner eine weitere Abgrenzung in Form einer Zwischenwand ZW zum Hohlraum hin vorgesehen sein. Das Anschlusskabel KA2 als mehradrige Zuleitung ist in dem skizzierten Beispiel seitlich von der Platine weg geführt und nach hinten umgelenkt. Das Kabel wird beim Einbringen der Vergussmasse und/oder der Dichtmasse von diesen mit umschlossen und abgedichtet. Das Kabel kann auch durch die Vergussmasse VM weiter seitlich herausgeführt und nicht nach hinten umgelenkt sein.

In anderer, in Fig. 4 skizzierter Ausführungsform kann der Hohlraum einer nach Fig. 2 mit einem Profil als Lichtscheibe aufgebauten Leuchte durch eine Endverschlusskappe VK abgeschlossen sein, wobei eine solche Endverschlusskappe VK mit dem Profil und dem Schaltungsträger ST den Hohlraum seitlich dicht abschließt. Dies kann durch Verkleben, durch Verspannen von elastischen Dichtelementen an der Endkappe VK gegen Flächen der Lichtscheibe und/oder des Schaltungsträgers oder wiederum durch Vergießen von Fugen mit Dichtmaterial erfolgen. Eine Zuleitung n Form eines Verbindungskabels kann auch abgedichtet durch die Endverschlusskappe nach außen geführt sein.

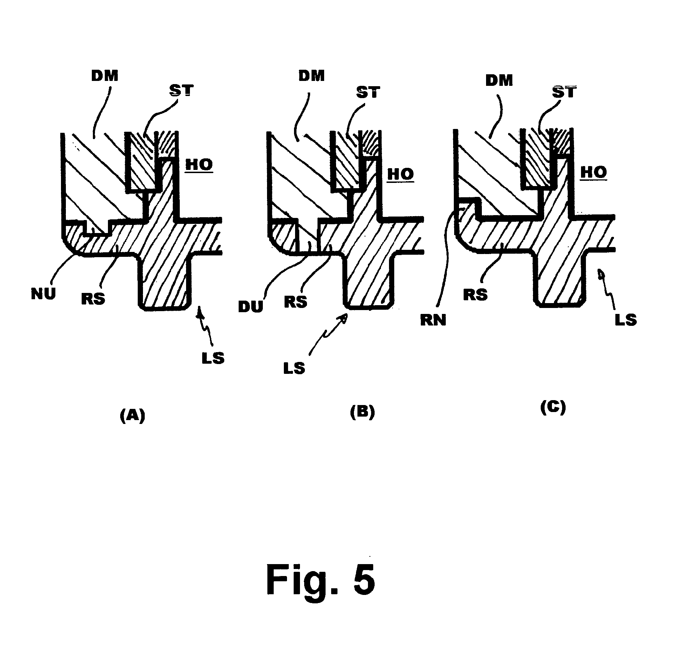

in Fig. 5 sind drei Varianten einer vorteilhaften formschlüssigen Verankerung des Dichtmaterials an der Lichtscheibe skizziert. In der Variante (A) ist an einer dem Dichtmaterial DM zugewandten Fläche eines nach hinten weisenden Wandabschnittes RS der Lichtscheibe LS eine Vertiefung NU eingebracht, welche beispielsweise als Längsnut in einem Lichtscheibenprofil ausgebildet sein kann. Dichtmaterial DM dringt beim Vergießen der dem Hohlraum HO abgewandten Seite des Schaltungsträgers ST auch in die Vertiefung NU als ein Fortsatz ein und bewirkt so zusätzlich zur Verankerung des Dichtmaterials DM durch Haftung an der Oberfläche der Lichtscheibe auch noch als formschlüssige Verankerung.

In der in Fig.5 (B) skizzierten Variante ist ein Wanddurchbruch DU in der das Dichtmaterial DM begrenzenden Wand RS der Lichtscheibe LS vorgesehen, weicher mit dem Dichtmaterial verfüllt ist. in einer Weiterbildung einer solchen Variante kann Dichtmaterial auch noch außerhalb des Durchbruchs aufgebracht sein.

Bei der Variante nach Fig. 5 (C) ist an dem nach hinten weisenden Wandabschnitt RS der Lichtscheibe LS, vorzugsweise an der dem Hohlraum HO abgewandten hinteren Kante dieses Wandabschnitts RS ein Vorsprung RN zum Dichtmaterial hin vorgesehen, welcher bei Einbringen des Dichtmaterials DM von diesem hinterflossen wird, so dass wiederum eine formschlüssige Verankerung des Dichtmaterials entsteht.

Die Varianten nach Fig. 5 (A) und Fig. 5 (C) sind insbesondere von Vorteil bei Lichtscheiben in Form von extrudierten Profilen, wo die Verankerungsstrukturen NU, RN ohne Mehraufwand als Teil des Profilquerschnitts erzeugt werden können. Die Variante nach Fig. 5 (B) bietet sich für formgespritzte Lichtscheiben an.

Das Dichtmaterial DM und/oder das Vergussmaterial VM können beispielsweise als thermoplastisches Material, insbesondere als thermoplastisches Elastomer, in einem Spritzgussverfahren bei erhöhter Temperatur und erhöhtem Druck aufgebracht werden, wobei dann vorteilhafterweise an der Lichtscheibe noch Stützelemente an der Lichtscheibe zum Schaltungsträger hin vorgesehen sind, welche den bei einem solchen Spritzgussvorgang auftretenden hohen Druck zuverlässig abfangen. Solche Stützelemente können beispielsweise als quasi punktförmige Streben oder als Zwischenwände ausgeführt sein und sind vorteilhafterweise bei Herstellung der Lichtscheibe als Spritzgussteil ohne besonderen Zusatzaufwand mit erzeugbar.

In anderer Ausführungsform kann das Dichtmaterial DM und/oder das Vergussmaterial VM in gießfähiger, insbesondere dünnflüssiger Form aufgebracht werden und sich an dem Leuchtenkörper verfestigen.

Das Dichtmaterial und das Vergussmaterial sind vorzugsweise nach Verfestigung dauerhaft elastische Materialien.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Fahrzeugleuchte mit einem hohlen geschlossenen Leuchtengehäuse, welches eine Lichtscheibe und einen Gehäuseboden enthält, die entlang wenigstens einer Gehäusefuge zusammengefügt sind, und welches wenigstens entlang der Gehäusefuge mit einem Dichtmaterial versehen ist, und mit einer in dem Hohlraum des Gehäuses liegenden elektronischen Anordnung mit wenigstens einer elektronischen Lichtquelle, **dadurch gekennzeichnet, dass** die Lichtquelle auf einem formstabilen Schaltungsträger mit elektrischen Leiterbahnen und mit der elektronischen Lichtquelle angeordnet ist und dass der formstabile Schaltungsträger den Gehäuseboden bildet.

2. Fahrzeugleuchte nach Anspruch 1, **dadurch gekennzeichnet, dass** der Schaltungsträger eine ebene Platine mit Leiterbahnen enthält.

3. Fahrzeugleuchte nach Anspruch 1 oder 2, **dadurch gekennzeichnet, dass** die Lichtquelle wenigstens eine Leuchtdiode enthält.

4. Fahrzeugleuchte nach einem der Ansprüche 1 bis 3, **dadurch gekennzeichnet, dass** auf dem Schaltungsträger zusätzlich zu der Lichtquelle weitere elektronische Bauelemente angeordnet sind und funktional mit der Lichtquelle verschaltet sind.

5. Fahrzeugleuchte nach einem der Ansprüche 1 bis 4, **dadurch gekennzeichnet, dass** der Schaltungsträger wenigstens zwei Schichten enthält, von welchen eine erste Schicht dem Hohlraum zugewandt aus isolierendem Material und eine zweite dem Hohlraum abgewandte Schicht aus gut wärmeleitendem Material besteht.

6. Fahrzeugleuchte nach Anspruch 5, **dadurch gekennzeichnet, dass** die Schicht aus gut wärmeleitendem Material durch eine Aluminiumplatte gebildet ist.

7. Fahrzeugleuchte nach einem der Ansprüche 1 bis 6, **dadurch gekennzeichnet, dass** die Lichtscheibe von dem Schaltungsträger weg gewölbt ist.

8. Fahrzeugleuchte nach Anspruch 7, **dadurch gekennzeichnet, dass** die Lichtscheibe topfförmig ausgebildet ist.

9. Fahrzeugleuchte nach Anspruch 7, **dadurch gekennzeichnet, dass** die Lichtscheibe als U-förmiges Profil ausgeführt ist und mit dem Schaltungsträger einen in Profillängsrichtung an beiden Enden offenen Hohlraum begrenzt.

10. Fahrzeugleuchte nach Anspruch 9, **dadurch gekennzeichnet, dass** wenigstens eines der offenen Enden durch eine Verschlusskappe verschlossen ist.

11. Fahrzeugleuchte nach Anspruch 9, **dadurch gekennzeichnet, dass** wenigstens eines der Enden durch eine Vergussmasse vergossen ist.

12. Fahrzeugleuchte nach einem der Ansprüche 7 bis 11, **dadurch gekennzeichnet, dass** an der Lichtscheibe innerhalb des Hohlraums mehrere bis zu dem Schaltungsträger reichende Stützelemente ausgebildet sind.

13. Fahrzeugleuchte nach einem der Ansprüche 1 bis 12, **dadurch gekennzeichnet, dass** eine Zuleitung von dem Schaltungsträger nach außen geführt ist.

14. Fahrzeugleuchte nach Anspruch 13, **dadurch gekennzeichnet, dass** die Zuleitung durch ein mehradriges Kabel gebildet ist.

15. Fahrzeugleuchte nach Anspruch 13, **dadurch gekennzeichnet, dass** die Zuleitungen durch eine Kontaktvorrichtung gebildet sind.

16. Fahrzeugleuchte nach einem der Ansprüche 13 bis 15, **dadurch gekennzeichnet, dass** die Zuleitung an einem Ansatz vom Schaltungsträger her mit Dichtmaterial ummantelt ist.

17. Fahrzeugleuchte nach einem der Ansprüche 1 bis 16, **dadurch gekennzeichnet, dass** die der Lichtscheibe abgewandte Rückseite des Schaltungsträgers ganzflächig mit Dichtmaterial verkleidet ist.

18. Fahrzeugleuchte nach einem der Ansprüche 1 bis 17, **gekennzeichnet durch** thermoplastisches Material als Dichtmaterial.

19. Fahrzeugleuchte nach Anspruch 18, **dadurch gekennzeichnet, dass** das Dichtmaterial ein thermoplastisches Elastomer ist.

20. Fahrzeugleuchte nach einem der Ansprüche 1 bis 17, **dadurch gekennzeichnet, dass** das Dichtmaterial ein anfänglich dünnflüssiges giessfähiges Material ist.
